# EUROPEAN PATENT SPECIFICATION

(11) **EP 3 597 890 B1**
(45) Date of publication and mention of the grant of the patent: **11.09.2024**
(21) Application number: 19186113.7
(22) Date of filing: 12.07.2019
(51) Int. Cl.: F02D 41/20

(54) **ENGINE CONTROL SYSTEM AND METHOD FOR CONTROLLING ACTIVATION OF SOLENOID VALVES**
MOTORSTEUERUNGSSYSTEM UND VERFAHREN ZUR STEUERUNG DER BETÄTIGUNG VON MAGNETVENTILEN
SYSTÈME DE COMMANDE DE MOTEUR ET PROCÉDÉ DE COMMANDE D'ACTIVATION D'ÉLECTROVANNES

(30) Priority: 17.07.2018 US 201816036996
(43) Date of publication of application: 22.01.2020
(73) Proprietor: Vitesco Technologies USA, LLC, Auburn Hills, MI 48326 (US)
(72) Inventor: Etzler, Dirk, DE-81737 München (DE)
(74) Representative: Vitesco Technologies

(56) References cited:
- EP-A1- 2 119 895
- WO-A1-2015/039095
- DE-A1- 102007 024 397
- DE-A1- 102012 218 157
- JP-A- 2016 048 069
- US-A1- 2017 358 387

## Description

### CROSS REFERENCE TO RELATED APPLICATION

The present application is related to US patent application 15/176,270, filed June 8, 2016 and titled "Engine Control System and Method for Controlling Actuation of Solenoid Valves".

### TECHNICAL FIELD

The technical field relates generally to control techniques for solenoid valves and more particularly to controlling fuel injector valves in an internal combustion engine.

### BACKGROUND

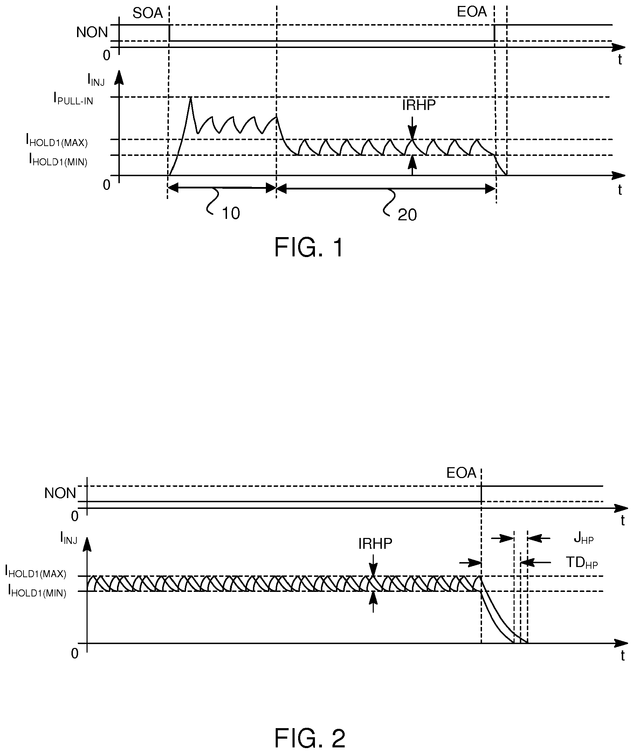

Solenoid actuators for (direct) injection valves and intake valves are operated by controlling the current through its coil (which behaves as a resistive-inductive load) according to a specified current profile. As an example, Fig. 1 shows a typical current profile that is used to activate a solenoid direct injection valve. The current profile includes various activation phases having different parameter definitions. All of the activation phases of the current profile are run through in sequence based on time or current criteria until the end of activation EOA has been reached. The current profile includes a rise-to peak phase 10 in which injector valve current rises to open the injector valve, followed by a hold phase 20 in which a regulated current level of the injector valve is less than a current level of the injector valve in the rise-to-peak phase but which holds the injector valve in the open state. The hold phase 20 is continued until the control signal NON is de-asserted. The control signal NON defines the start of activation SOA as corresponding to the control signal NON being asserted, and defines the end of activation EOA as corresponding to the control signal NON being de-asserted.

Fig. 2 illustrates accuracy and repeatability with respect to the end of activation EOA. The term "accuracy" specifies the mean delay between de-asserting the control signal NON and the resulting decay of the injector solenoid current. The term "repeatability" describes the time deviation of the decay from the mean value (i.e., jitter). Due to the systematic nature of the delay, this error may be compensated by adjusting the duration of control signal NON. Since the jitter is random in nature, it cannot be compensated for. Instead, the jitter needs to be reduced or otherwise minimized by design.

Depending on a set of external engine conditions, such as the requested output torque and power of the engine or the rail pressure, the needed fuel mass is changed by varying the activation time of the injector. The activation of the injector is controlled by the main microcontroller with help of the digital control signal NON. The injector will be activated using the specified current profile when the control signal is asserted (in this case, when the control signal NON transitions to a logic low state) and deactivated when the control signal is de-asserted (when the control signal NON transitions to a logic high state).

A significant portion of the activation time tolerance is given by the delay and jitter of the final current phase at the end of the activation EOA. When the control signal NON is de-asserted (e.g., when signal NON transitions from logic low to logic high), all NMOS switches of the power stage driving the injector solenoid are turned off, leading to a fast decaying injector current. Due to a non-ideal power stage, there is a systematic delay between the rising edge of the control signal NON and the decay of the injector current. Furthermore, an inherent stastical variation of the injector current level at the moment of the control signal de-assertion from one activation to the next leads to shot-to-shot timing variation (i.e., jitter) of the current decay. That means that the higher the current ripple during the regulated current hold phase 20, the higher the shot-to-shot variation of the current decay. Fig. 2 illustrates timing details with respect to the tolerance of the end of activation EOA.

Whereas all systematic errors (e.g., delay) can be compensated by adjusting the duration of the control signal NON, the random, statistical part (e.g., shot-to-shot variation) of the error cannot be counterbalanced. Thus, in order to reduce the shot-to-shot variation, the current ripple should to be reduced or otherwise minimized. On the other hand, reducing the current ripple leads to a higher switching frequency of the NMOS switches and thus to higher switching losses. For design reasons, there is a maximum limit to the power loss and consequently to a reduction of the current ripple.

A dedicated application specific integrated circuit ("ASIC") may be utilized to control the injector valves. As such, the ASIC applies current to the injector solenoid according to the current profile definition based on instructions and commands received from an external processor.

DE 10 2007 024397 A1 shows a method, wherein the method involves flowing of electric current in an injecting valve, whose current profile has a retaining phase divided into two sections. The current profile of latter section is steered or regulated to a lower effective value that is provided at the former section. The effective value of the current is lowered by the former section to the latter section.

DE 10 2012 218157 A1 shows a magnetic valve control unit. The magnetic valve control unit has a capacitor, which is switched from a direct current power supply to a magnetic valve to charge a high voltage in the magnetic valve. A charging section generates high voltage by using an inductive component connected with the direct current power supply. A switching section is controlled when the high voltage lies in the magnetic valve, where another switching section is controlled when the supply voltage lies in the magnetic valve. A control section is provided for controlling the switching sections.

WO 2015/039095 A1 provides a system for adjusting a fuel injector drive signal during a fuel injection event wherein the system comprises an engine having a fuel injector, a fuel control module configured to generate control signals corresponding to a desired fueling profile of a fuel injection event, and a fueling profile interface module that outputs drive profile signals to the fuel injector in response to the control signals to cause the fuel injector to deliver an actual fueling profile, wherein the fueling profile interface module changes the drive profile signals during the fuel injection event in response to a parameter signal indicating a characteristic of the actual fueling profile.

US 2017/358387 A1 shows an engine control system and method utilizes a processor and a valve controller in communication with the processor. A valve having a solenoid is in communication with the valve controller. The valve controller is configured to receive a combined selection and control signal from the processor, decode a desired electric current profile encoded in the signal, sense a control code encoded in the signal, and operate the solenoid in accordance with the decoded desired electric current profile in response to sensing the control code.

As such, it is desirable to present a system and method for efficiently controlling actuation of solenoid injector valves. In addition, other desirable features and characteristics will become apparent from the subsequent summary and detailed description, and the appended claims, taken in conjunction with the accompanying drawings and this background.

### BRIEF SUMMARY

Example embodiments overcome deficiencies in existing control devices for solenoid injector valves. In an example embodiment, a valve controller includes a first input and a first output for coupling to the valve. The valve controller is configured to selectively activate the valve following receipt of a first edge of a first input signal at the first input. The valve activation includes a rise-to-peak phase followed by a hold phase in which a current level of the valve during the hold phase is less than a current level of the valve in the rise-to-peak phase, and an ending-of-activation phase following the hold phase in which current ripple of the valve is less than the current ripple of the valve in the hold phase. The less amount of current ripple in the ending-of-activation phase is achieved by an increased switching frequency of drive transistors in the valve controller.

The valve controller transitions activation of the valve from the hold phase to the ending-of-activation phase following receipt of a second edge of the first input signal at the first input. In an example embodiment, the duration of the ending-of-activation phase is predetermined. The duration of the hold phase is larger than the duration of the ending-of-activation phase. The first edge of the first input signal is a falling edge and the second edge of the first input signal is a rising edge which follows the falling edge. The valve controller transitions activation of the valve from the hold phase to the ending-of-activation phase in response to receipt of a second edge of the first input signal at the first input. The valve includes a fuel injector for a motor vehicle having a combustion engine such that the valve controller controls the fuel injector. The valve controller includes an application specific integrated circuit (ASIC), the ASIC having at least one state machine. The at least one state machine generates a first output signal at the first output for receipt by the valve, which activates the valve in the rise-to-peak phase, the hold phase and the ending-of-activation phase. An amount of jitter of the current valve is less than the amount of jitter of the current valve without the valve being activated in the ending-of-activation phase. A method of controlling a solenoid injector valve includes receiving a first input signal; detecting a first edge of the first input signal; and in response to detecting the first edge of the first input signal, activating the valve. Valve activating includes activating the valve in a rise-to-peak phase during which the valve is opened, a hold phase following the rise-to-peak phase during which the valve remains open and a current level of the valve is less than a current level of the valve during the rise-to-peak phase, and an ending-of-activation phase following the hold phase during which current ripple in the valve is less than the current ripple in the valve during the hold phase.

The method further includes detecting a second edge of the first input signal, wherein activating the valve in the ending-of-activation phase occurs in response to detecting the second edge of the first input signal. The first edge is a falling edge of the first input signal and the second edge of the first input signal is a rising edge thereof. The second edge of the first input signal is the next edge thereof in succession following the first edge of the first input signal.

The method may further include detecting a second edge of the first input signal, wherein activating the valve in the ending-of-activation phase occurs following detecting the second edge of the first input signal. Activating the valve in the ending-of-activation phase occurs over a predetermined period of time. The predetermined period of time is fixed each instance during which the valve is activated. In one aspect, the duration of the hold phase is greater than a duration of the ending-of-activation phase. In another aspect, the duration of the ending-of-activation phase is greater than the duration of the hold phase.

### BRIEF DESCRIPTION OF THE DRAWINGS

Other advantages of the disclosed subject matter will be readily appreciated, as the same becomes better understood by reference to the following detailed description when considered in connection with the accompanying drawings wherein:
Figure 1 is a waveform of a known current profile for operating a solenoid valve;
Figure 2 is a waveform of a detailed portion of the current profile of Figure 1;
Figure 3 is a diagram of a vehicle having an engine control system, according to an example embodiment;
Figure 4 is waveform of a current profile for operating a solenoid valve according to an example embodiment;
Figure 5 is a waveform of a detailed portion of the current profile for operating a solenoid valve of Figure 4; and
Figure 6 is flowchart of a method of controlling a solenoid valve according to an example embodiment.

### DETAILED DESCRIPTION

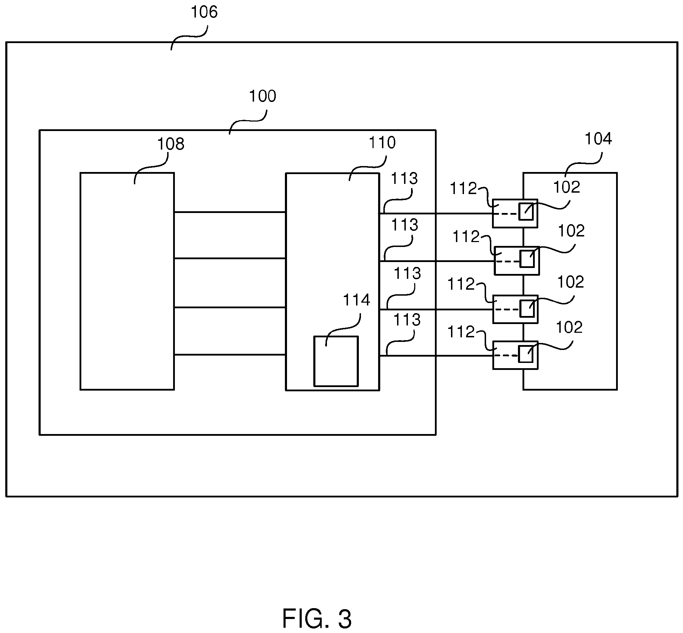

Referring to the Figures 3-6, wherein like numerals indicate like parts throughout the several views, an engine control system and method of controlling actuation of a solenoid valve are shown and described herein.

Referring to Figure 3, the engine control system 100 of an example embodiment is utilized to control at least one aspect of an engine 104 of a vehicle 106. The engine 104 may be an internal combustion engine fueled with, for example, a petroleum product such as gasoline or diesel fuel. Of course, those skilled in the art appreciate that other fuels may be utilized with the engine 104 and/or that other types of engine 104 may be implemented. The vehicle 106 may be an automobile, truck, tractor, motorcycle, boat, aircraft, etc., as is readily appreciated by those skilled in the art.

The engine control system 100 includes a processor 108. The processor 108 is capable of performing calculations, manipulating data, and/or executing instructions, i.e., running a program. The processor 108 may be implemented with a microprocessor, microcontroller, application specific integrated circuit ("ASIC"), and/or other device(s) (not shown) as appreciated by those skilled in the art. The processor 108 may include a memory (not shown) for storing data and/or instructions as is also appreciated by those skilled in the art. The engine control system 100 also includes a valve controller 110. In the example embodiment, the valve controller 110 is independent from the processor 108 and is implemented with an ASIC. The valve controller 110 generates control signals for controlling one or more valves 112. The valve controller 110 may include one or more state machines which generate the control signals for the valves 112. However, it should be appreciated that the valve controller 110 may be implemented with other devices and/or circuitry as appreciated by those skilled in the art.

The valve controller 110 is in communication with the processor 108. As such, instructions and/or data may be sent at least from the processor 108 to the valve controller 110, as described in greater detail below.

In the illustrated embodiment, the valve controller 110 is also in communication with a plurality of valves 112. As shown in Fig. 3, four valves 112 are utilized, each in communication with the valve controller 110 such that each valve 112 is controlled thereby. In this example embodiment, the valves 112 are each direct injection valves 112 for directly injecting fuel into a cylinder (not shown) of the engine 104. However, it should be appreciated that the valves 112 may be other types of fuel valves and/or serve other purposes. For example, one or more of the valves 112 may be an intake valve for regulating air and/or fuel flow to the cylinder(s).

In the example embodiment, each valve 112 includes a solenoid 102 mentioned above. As appreciated by those skilled in the art, the solenoid 102 activates and/or actuates the valve 112 between positions and/or states, such as an open position and a closed position. That is, the solenoid 102 opens the valve to allow fluid, in this case fuel, to flow therethrough and closes the valve to prevent fluid from flowing. The solenoid 102 is in communication with the valve controller 110. As such, the valve controller 110 may generate one or more output control signals 113 and/or other data for controlling activation of each valve 112 and/or the solenoid 102 thereof. In an example embodiment, each valve 112 and/or solenoid 102 is controlled by a distinct set of one or more control signals 113. Each control signal 113 may be a pair of differential signals.

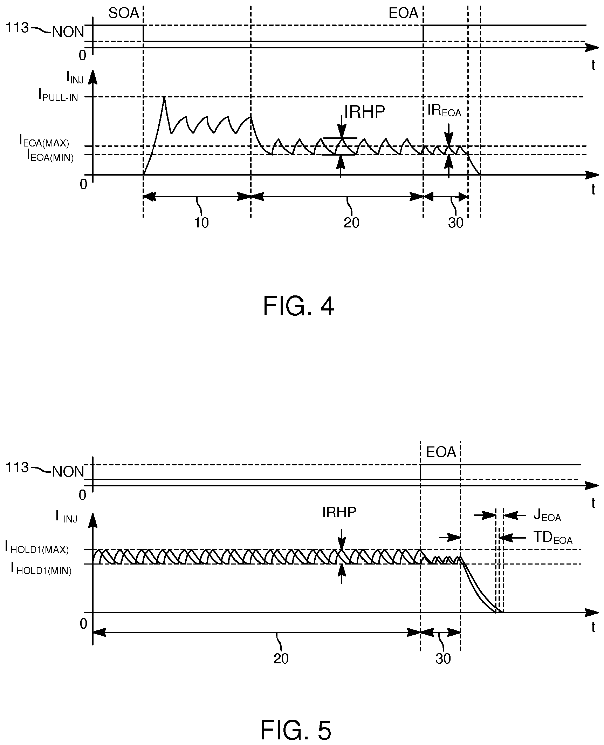

In an example embodiment, the valve controller 110 includes a memory 114 for storing, among other things, at least one current profile. A current profile defines the electric current in each solenoid 102 and/or valve 112 throughout valve activation. Figure 4 depicts a current profile 400 for each solenoid 102 and/or valve 112 during valve activation, according to an example embodiment. Similar to the conventional current profile of Figure 1, the current profile includes a rise-to-peak phase 10 during which current levels in the solenoid 102 are such as to open the corresponding valve 112, and a hold phase 20 which follows the rise-to-peak phase 10 and during which current levels in the solenoid 102 are sized to maintain valve 112 in the open position. Figure 4 illustrates the amount of current ripple IR_{HP} during this activation phase. According to example embodiments, the current profile 400 includes another phase 30 which follows the hold phase 20 and during which the amount of current ripple IR_{EOA} in solenoid 102 is reduced compared to the amount of current ripple IR_{HP} during the hold phase 20. The amount of current ripple is reduced by increasing the switching frequency of the drive transistors (not shown) in the valve controller 110 for the valve 112. Increasing the switching frequency will lead to greater switching losses in the phase 30. However, by limiting the time duration of this phase 30, the increase in power loss during the phase 30 is relatively limited and unappreciable. The phase 30 occurs after the hold phase 20 and just prior to the end of the activation period for valve 112, and is hereinafter referred to as the ending-of-activation phase 30. In this way, the example embodiments effectively separate the hold phase 20 from the ending-of-activation phase 30 having reduced current ripple IR_{EOA}, thereby maintaining no increase in power loss during the hold phase 20.

Valve activation in the rise-to-peak phase 10 occurs in response to a triggering and/or asserting edge of control signal 113, which in the embodiment illustrate in Figs. 1 and 4 is the falling edge of control signal 113. In addition, valve activation transitions from the hold phase 20 to the ending-of-activation phase 30 following and in response to a rising (de-asserting) edge of control signal 113 which follows the above-identified falling edge thereof.

In an example embodiment, ending-of-activation phase 30 has a time duration that is fixed at a predetermined amount such that the time duration of the ending-of-activation phase 30 in each instance of valve activation is the same. In an example embodiment, the valve controller 110 is implemented as or otherwise includes a state machine having timing circuitry for, among other things, setting the time duration of the ending-of-activation phase 30.

Fig. 5 illustrates that as a result of the reduced current ripple IR_{EOA} in a valve 112 during the ending-of-activation phase 30, relative to the amount current ripple IR_{HP} during the corresponding hold phase 20, the amount of jitter J_{EOA} following the ending-of-activation phase 30 is reduced relative to the amount of jitter J_{HP} seen in existing valve activations of Fig. 1 which do not include the ending-of-activation phase 30. The reduced jitter J_{EOA} results in valve activation having better accuracy and repeatability. Further, the time delay TD_{EOA} between the end of the ending-of-activation phase 30 and the time when current in the valve 112 no longer exists is noticeably smaller due to the reduced current ripple IR_{HP}, relative to the time delay TD_{HP} seen in the current profile of Fig. 2 which does not include an ending-of-activation phase 30.

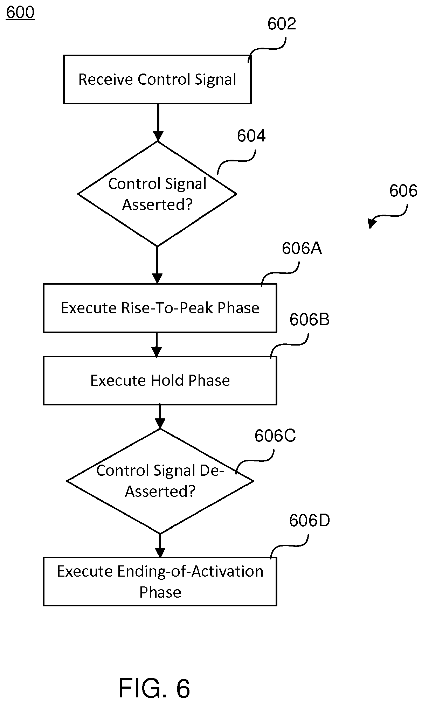

The valve controller 110 described above is configured to execute the method 600 of controlling the activation of the solenoids 102, as described below and with reference to Fig. 6. However, it should be appreciated that the method 600 described herein may be practiced with other devices besides the vehicle 106, engine 104, valve controller 110 and engine control system 100 described above.

With reference to Fig. 6, method 600 illustrates the operation of the valve controller 110 according to an example embodiment. For simplicity, the method 600 will be described with respect to controlling a single valve 112, and it is understood that the described method is applicable to each valve 112 of the engine 104. Method 600 includes the valve controller 110 receiving control signal 113 for a valve 112 at 602 and determining, at 604, whether an asserting (in this case, falling) edge of control signal 113 occurs. A negative determination results in the valve controller 110 returning to act 602. A positive determination that an asserting (falling) edge of control signal 113 occurs results in the valve controller 110 causing the execution of a valve activation cycle at 606, including the acts of executing a rise-to-peak phase 10 at 606A, followed by executing a hold phase 20 at 606B. Next, and while the valve 112 is in the hold activation phase 20, the valve controller 110 determines whether a de-asserting (rising) edge of the control signal 113 occurs at 606C. If no such edge is detected/determined, the valve controller 110 continues activating the valve 112 in the hold phase 20. Upon a de-asserting edge of the control signal 113 being determined/detected, the valve controller 110 in response causes at 606D the execution of the ending-of-activation phase 30. As mentioned, the ending-of-activation phase 30 is performed for a predetermined period of time, during which current ripple IR_{EOA} is reduced relative to the amount of current ripple IR_{HP} during the hold phase 20. This is accomplished by increasing the switching frequency of the drive transistors in the valve controller 110 which drive the solenoid 102 of the valve 112. Though the amount of power loss is increased during this phase 30, the amount of power loss during the longer hold phase 30 is unaffected. The present invention has been described herein in an illustrative manner, and it is to be understood that the terminology which has been used is intended to be in the nature of words of description rather than of limitation. Obviously, many modifications and variations of the invention are possible in light of the above teachings. The invention may be practiced otherwise than as specifically described within the scope of the appended claims.

## Claims

1. A valve controller (110) configured to control a valve having a solenoid, the valve controller (110) comprising:
a first input and at least one output for coupling to the valve (112) , the valve controller (110) configured to selectively activate the valve (112) following receipt of a first edge of a first signal at the first input, the valve activation including a rise-to-peak phase (10) followed by a hold phase (20) in which a current level of the valve (112) during the hold phase (20) is less than a current level of the valve (112) in the rise-to-peak phase (10), and
an ending-of-activation phase (30) following the hold phase (20) in which current ripple (IR_{EOA}) of the valve (112) is less than the current ripple (IR_{HP}) of the valve (112) in the hold phase (20), wherein the less amount of current ripple in the ending-of-activation phase is achieved by an increased switching frequency of drive transistors in the valve controller (110).

2. The valve controller (110) according to claim 1, wherein a duration of the ending-of-activation phase (30) is predetermined.

3. The valve controller (110) according to claim 2, wherein a duration of the hold phase (20) is larger than the duration of the ending-of-activation phase (30).

4. The valve controller (110) according to claim 1, wherein the first edge of the first signal is a falling edge and the second edge of the first signal is a rising edge which follows the falling edge.

5. The valve controller (110) according to claim 1, wherein the valve (112) comprises a fuel injector for a motor vehicle (106) having a combustion engine (104) such that the valve controller (110) controls the fuel injector.

6. The valve controller (110) of claim 1, wherein the valve controller (110) comprises an application specific integrated circuit (ASIC), the ASIC including at least one state machine, the at least one state machine generating at least one output signal for receipt by the valve (112) which activates the valve (112) in the rise-to-peak phase, the hold phase (20) and the ending-of-activation phase.

7. A method of controlling a valve (112) having a solenoid (102), comprising:
receiving a least one input signal;
detecting a first edge of the at least one input signal; and
in response to detecting the first edge of the at least one input signal, activating the valve (112), comprising activating the valve (112) in a rise-to-peak phase (10)during which the valve (112) is opened, a hold phase (20) following the rise-to-peak phase (10)during which the valve (112) remains open and a current level of the valve (112) is less than a current level of the valve (112) during the rise-to-peak phase, and an ending-of-activation phase (30) following the hold phase (20) during which current ripple (IR_{EOA}) in the valve (112) is less than the current ripple (IR_{HP}) in the valve (112) during the hold phase (20),
wherein the less amount of current ripple in the ending-of-activation phase is achieved by an increased switching frequency of drive transistors in the valve controller (110).

8. The method according to claim 7, wherein the first edge is a falling edge of the at least one input signal and the second edge of the at least one input signal is a rising edge of the at least one input signal, the second edge of the at least one input signal being a next edge thereof following the first edge of the at least one input signal.

9. The method according to claim 7, wherein activating the valve (112) in the ending-of-activation phase (30) occurs over a predetermined period of time.

10. The method according to claim 9, wherein the predetermined period of time is fixed at the predetermined period of time in each instance in which the valve (112) is activated.

11. The method according to claim 7 wherein a duration of the hold phase (20) is greater than a duration of the ending-of-activation phase (30).

12. The method according to claim 7, wherein a duration of the ending-of-activation phase (30) is greater than a duration of the hold phase (20).

## Patentansprüche

1. Ventilsteuerung (110), ausgebildet zur Steuerung eines Ventils mit einer Magnetspule, wobei die Ventilsteuerung (110) Folgendes umfasst:
einen ersten Eingang und mindestens einen Ausgang zur Kopplung mit dem Ventil (112), wobei die Ventilsteuerung (110) ausgebildet ist, um das Ventil (112) nach dem Empfang einer ersten Flanke eines ersten Signals am ersten Eingang selektiv zu aktivieren, wobei die Ventilaktivierung eine Anstiegsspitzenphase (10), gefolgt von einer Haltephase (20), in der ein Strompegel des Ventils (112) während der Haltephase (20) geringer ist als ein Strompegel des Ventils (112) in der Anstiegsspitzenphase (10), aufweist und eine auf die Haltephase (20) folgende Aktivierungsbeendigungsphase (30), in der die Stromwelligkeit (IR_{EOA}) des Ventils (112) geringer ist als die Stromwelligkeit (IR_{HP}) des Ventils (112) in der Haltephase (20), wobei der geringere Betrag der Stromwelligkeit in der Aktivierungsbeendigungsphase durch eine erhöhte Schaltfrequenz von Treibertransistoren in der Ventilsteuerung (110) erreicht wird.

2. Ventilsteuerung (110) nach Anspruch 1, wobei eine Dauer der Aktivierungsbeendigungsphase (30) vorgegeben ist.

3. Ventilsteuerung (110) nach Anspruch 2, wobei eine Dauer der Haltephase (20) größer ist als die Dauer der Aktivierungsbeendigungsphase (30).

4. Ventilsteuerung (110) nach Anspruch 1, wobei die erste Flanke des ersten Signals eine fallende Flanke ist und die zweite Flanke des ersten Signals eine steigende Flanke ist, die auf die fallende Flanke folgt.

5. Ventilsteuerung (110) nach Anspruch 1, wobei das Ventil (112) ein Kraftstoffeinspritzventil für ein Kraftfahrzeug (106) mit einem Verbrennungsmotor (104) umfasst, so dass die Ventilsteuerung (110) das Kraftstoffeinspritzventil steuert.

6. Ventilsteuerung (110) nach Anspruch 1, wobei die Ventilsteuerung (110) eine anwendungsspezifische integrierte Schaltung (ASIC) aufweist, wobei die ASIC mindestens eine Zustandsmaschine aufweist, wobei die mindestens eine Zustandsmaschine mindestens ein Ausgangssignal zum Empfang durch das Ventil (112) erzeugt, das das Ventil (112) in der Anstiegsspitzenphase, der Haltephase (20) und der Aktivierungsbeendigungsphase aktiviert.

7. Verfahren zur Steuerung eines Ventils (112) mit einer Magnetspule (102), das Folgendes umfasst:
Empfangen mindestens eines Eingangssignals;
Erkennen einer ersten Flanke des mindestens einen Eingangssignals; und
als Reaktion auf das Erkennen der ersten Flanke des mindestens einen Eingangssignals, Aktivieren des Ventils (112), umfassend das Aktivieren des Ventils (112) in einer Anstiegsspitzenphase (10), während der das Ventil (112) geöffnet wird, einer Haltephase (20), die der Anstiegsspitzenphase (10) folgt, während der das Ventil (112) offen bleibt und ein Strompegel des Ventils (112) kleiner ist als ein Strompegel des Ventils (112) während der Anstiegsspitzenphase, und eine Aktivierungsbeendigungsphase (30), die auf die Haltephase (20) folgt, während der die Stromwelligkeit (IR_{EOA}) in dem Ventil (112) geringer ist als die Stromwelligkeit (IR_{HP}) in dem Ventil (112) während der Haltephase (20),
wobei die geringere Stromwelligkeit in der Aktivierungsbeendigungsphase durch eine erhöhte Schaltfrequenz der Treibertransistoren in der Ventilsteuerung (110) erreicht wird.

8. Verfahren nach Anspruch 7, wobei die erste Flanke eine fallende Flanke des mindestens einen Eingangssignals ist und die zweite Flanke des mindestens einen Eingangssignals eine steigende Flanke des mindestens einen Eingangssignals ist, wobei die zweite Flanke des mindestens einen Eingangssignals eine nächste Flanke davon ist, die auf die erste Flanke des mindestens einen Eingangssignals folgt.

9. Verfahren nach Anspruch 7, wobei die Aktivierung des Ventils (112) in der Aktivierungsbeendigungsphase (30) über eine vorbestimmte Zeitspanne erfolgt.

10. Verfahren nach Anspruch 9, wobei die vorbestimmte Zeitspanne in jedem Fall, in dem das Ventil (112) aktiviert wird, auf die vorbestimmte Zeitspanne festgelegt wird.

11. Verfahren nach Anspruch 7, wobei eine Dauer der Haltephase (20) größer ist als eine Dauer der Aktivierungsbeendigungsphase (30).

12. Verfahren nach Anspruch 7, wobei eine Dauer der Aktivierungsbeendigungsphase (30) größer ist als eine Dauer der Haltephase (20).

## Revendications

1. Dispositif de commande de vanne (110) configuré pour commander une vanne comportant un solénoïde, le dispositif de commande de vanne (110) comprenant :
une première entrée et au moins une sortie destinée au raccordement à la vanne (112), le dispositif de commande de vanne (110) étant configuré pour activer sélectivement la vanne (112) après la réception d'un premier front d'un premier signal sur la première entrée, l'activation de la vanne comprenant une phase de montée en crête (10) suivie d'une phase de maintien (20) lors de laquelle un niveau de courant de la vanne (112) pendant la phase de maintien (20) est inférieur à un niveau de courant de la vanne (112) lors de la phase de montée en crête (10), et une phase de fin d'activation (30) qui suit la phase de maintien (20) lors de laquelle l'ondulation de courant (IR_{EOA}) de la vanne (112) est inférieure à l'ondulation de courant (IR_{HP}) de la vanne (112) lors de la phase de maintien (20), dans lequel le niveau d'ondulation de courant inférieur lors de la phase de fin d'activation est atteint par une augmentation de la fréquence de commutation des transistors d'attaque dans le dispositif de commande de vanne (110).

2. Dispositif de commande de vanne (110) selon la revendication 1, dans lequel une durée de la phase de fin d'activation (30) est prédéterminée.

3. Dispositif de commande de vanne (110) selon la revendication 2, dans lequel une durée de la phase de maintien (20) est supérieure à la durée de la phase de fin d'activation (30).

4. Dispositif de commande de vanne (110) selon la revendication 1, dans lequel le premier front du premier signal est un front descendant et le second front du premier signal est un front montant qui suit le front descendant.

5. Dispositif de commande de vanne (110) selon la revendication 1, dans lequel la vanne (112) comprend un injecteur de carburant destiné à un véhicule automobile (106) comportant un moteur à combustion (104) de telle sorte que le dispositif de commande (110) commande l'injecteur de carburant.

6. Dispositif de commande de vanne (110) selon la revendication 1, dans lequel le dispositif de commande de vanne (110) comprend un circuit intégré spécifique d'application (ASIC), l'ASIC comprenant au moins un automate fini, l'au moins un automate fini générant au moins un signal de sortie destiné à être reçu par la vanne (112) qui active la vanne (112) lors de la phase de montée en crête, de la phase de maintien (20) et de la phase de fin d'activation.

7. Procédé de commande d'une vanne (112) comportant un solénoïde (102), comprenant :
la réception d'au moins un signal d'entrée ;
la détection d'un premier front de l'au moins un signal d'entrée ; et
en réponse à la détection du premier front de l'au moins un signal d'entrée, l'activation de la vanne (112), comprenant l'activation de la vanne (112) lors d'une phase de montée en crête (10) pendant laquelle la vanne (112) est ouverte, une phase de maintien (20) qui suit la phase de montée en crête (10) lors de laquelle la vanne (112) reste ouverte et un niveau de courant de la vanne (112) est inférieur à un niveau de courant de la vanne (112) pendant la phase de montée en crête, et une phase de fin d'activation (30) qui suit la phase de maintien (20) pendant laquelle l'ondulation de courant (IR_{EOA}) dans la vanne (112) est inférieure à l'ondulation de courant (IR_{HP}) dans la vanne (112) pendant la phase de maintien (20),
dans lequel le niveau d'ondulation de courant inférieur au cours de la phase de fin d'activation est atteint par une augmentation de la fréquence de commutation des transistors d'attaque dans le dispositif de commande de vanne (110).

8. Procédé selon la revendication 7, dans lequel le premier front est un front descendant de l'au moins un signal d'entrée et le second front de l'au moins un signal d'entrée est un front montant de l'au moins un signal d'entrée, le second front de l'au moins un signal d'entrée étant un front suivant de celui-ci qui suit le front de l'au moins un signal d'entrée.

9. Procédé selon la revendication 7, dans lequel l'activation de la vanne (112) lors de la phase de fin d'activation (30) se produit au cours d'une période de temps prédéterminée.

10. Procédé selon la revendication 9, dans lequel la période de temps prédéterminée est fixée à la période de temps prédéterminée chaque fois que la vanne (112) est activée.

11. Procédé selon la revendication 7, dans lequel une durée de la phase de maintien (20) est supérieure à une durée de la phase de fin d'activation (30).

12. Procédé selon la revendication 7, dans lequel une durée de la phase de fin d'activation 5 (30) est supérieure à une durée de la phase de maintien (20).
